# EUROPEAN PATENT APPLICATION

(11) **EP 1 191 652 A1**
(43) Date of publication of application: **27.03.2002**
(21) Application number: 00931536.7
(22) Date of filing: 24.05.2000
(51) Int. Cl.: H02G 3/02

(54) **DECORATIVE FRAME**

(30) Priority: 28.05.1999 JP 15045499; 20.09.1999 JP 26596499; 07.10.1999 JP 28686799; 25.04.2000 JP 2000123987
(71) Applicant: Wada, Koichi, Kameoka-shi, Kyoto 621-0847 (JP)
(72) Inventor: Wada, Koichi, Kameoka-shi, Kyoto 621-0847 (JP)
(74) Representative: Gritschneder, Martin, Dipl.-Phys.
(86) International application number: JP0003310
(87) International publication number: WO0074190

(57) **Abstract**

A decorative frame, comprising a main body and a cover, the main body further comprising a circular cylindrical or a rectangular cylindrical peripheral wall, wherein inner holes are formed in the peripheral wall, an outward flange is provided at one end of the peripheral wall, the peripheral wall is inserted into the through-hole formed in a ceiling facing, and the outward flange is pressed against the upper surface of the ceiling facing and, in addition, supporting means is combined with the main body so as to supportingly mount the main body into the through-hole of the ceiling facing, the cover being used to close the inner hole of the main body.

## Description

### Technical field

The invention relates to a decorative frame intended to be fitted into and installed in a through hole formed in a ceiling facing.

### Background

It is required to distribute an electric wire in a ceiling space, for example in a process for addition of wiring fitting. In this case, an operator has to enter the ceiling space, go ahead in the ceiling space and pull and handle the electric wire in the ceiling space. The work is troublesome, taking considerable time and labour. It is also problematic in that the operator may be obstructed from entering the ceiling space and going ahead in the ceiling space by equipments such as air conditioning ducts, exhaust ducts and water tubes which are disposed in position in the ceiling space. In addition, the equipments may be damaged by a collision of operator with the equipments. What is called the ceiling space is a space formed above a ceiling facing and defined between a ceiling surface and the ceiling facing. The ceiling facing comprises a plaster board, plywood or the like which is fixed to a framework of double ceiling. The framework is composed of longitudinal and cross bars. In this connection, the framework may be damaged by the weight of operator entering the ceiling space and going ahead in the ceiling space. The ceiling facing may be broken by the weight of operator. Not only the framework and ceiling facing but the operator can be dropped.

In general, a number of fire sensors are required to be fixed to the ceiling surface for installation in the ceiling space before execution of framework. The work is also troublesome. In the first place, anchors need to be driven into the ceiling surface by an operator. Screws then need to be threadedly engaged with and into the anchors by the operator so that the fire sensors can be fixed to the ceiling surface with the screws. In addition, the ceiling surface is very high. The operator is therefore obliged to go up a stepladder to make the anchors driven and then make the screws threadedly engaged on the stepladder, taking considerable time and labour and being attended with danger. Furthermore, it is also problematic in that the fire sensors can not be fixed to the ceiling surface after execution of framework.

As to the fire sensors in the ceiling space, inspections and fire tests are prescribed in the fire law in Japan to be done semiyearly. The work is also troublesome by reason that the fire sensors are frequently concealed by the equipments such as air conditioning ducts, exhaust ducts and water tubes. The operator therefore has to enter the ceiling space and go ahead in the ceiling space to approach the fire sensors whenever inspecting and fire testing, taking considerable time and labour as in the case of the process for distribution of electric wire. It is also problematic in that the operator may be obstructed from entering the ceiling space and going ahead in the ceiling space by the equipments. The equipments may be damaged by a collision of operator with the equipments. The framework or ceiling facing may be damaged or broken by the weight of operator. Not only the framework and ceiling facing but also the operator can be dropped. In addition, the fire sensor may be required to be exchanged for new one for failure. However, it is very difficult to make the fire sensor removed and exchanged in the ceiling space in which the equipments are disposed in position.

Gas leakage detectors are also required to be fixed to the ceiling surface for installation in the ceiling space, with the same problems as the fire sensors in the ceiling space.

Furthermore, in view of the indoor electrical apparatus including electric wires, it is frequently desired to make a wiring fitting such as a plug receptacle, communication jack or television series unit fixed to the ceiling facing so that the electric wires can be connected to the wiring fitting of ceiling facing. However, the problem is a process for wiring rather than fixing. An open wire is required to be laid along the under surface of ceiling facing and. connected to the wiring fitting when the wiring fitting is fixed to the ceiling facing for newly installation, taking considerable time and labour and resulting in long term of process and high cost of process. In case of the open wire, a cable is required to be coated and protected by a protective cover, resulting in high cost of material. The ceiling facing should be lowered in appearance by the open wire laid along the under surface of ceiling facing. It is also problematic in that the wiring fitting must be once removed to confirm and inspect the connection of wiring fitting, when clarifying the cause of trouble.

Moreover, a monitoring camera or fire sensor is sometimes desired to be fixed in position to the ceiling surface for newly installation. A certain detector such as an infrared or thermal crime preventing detector, temperature detector, humidity detector or gas leakage detector is also desired to be fixed in position to the ceiling surface for newly installation. An alarm such as a buzzer is also desired to be fixed in position to the ceiling surface for newly installation. However, an open wire is required to be laid along the under surface of ceiling facing, taking considerable time and labour and resulting in long term of process and high cost of process, as in the case described above. A cable is required to be coated and protected by a protective cover, resulting in high cost of material, as in the case also described above. The ceiling facing should be lowered in appearance by the open wire laid along the under surface of ceiling facing, as in the case also described above. It is also problematic in that the monitoring camera, fire sensor, certain detector or alarm must be once removed to confirm and inspect the connection thereof, when clarifying the cause of trouble.

It is therefore an object of the invention to distribute an electric wire in a ceiling space without causing an operator to enter the ceiling space and go ahead in the ceiling space.

Other object of the invention is to accomplish works for installation, inspection, fire test and exchange of fire sensor in a ceiling space without difficulty.

Other object of the invention is to accomplish works for installation, inspection and exchange of gas leakage detector in a ceiling space without difficulty.

Other object of the invention is to accomplish a process for wiring without difficulty, resulting in short term of process and low cost of process, result in low cost of material, keep the ceiling facing from being lowered in appearance, and confirm and inspect the connection without difficulty, when installation of a wiring fitting, monitoring camera, fire sensor, certain detector or alarm on a ceiling facing.

### Disclosure of the invention

According to the invention, a decorative frame is composed of a body and a lid, the body including a cylindrical or rectangular peripheral wall. An internal hole is defined by and within the peripheral wall, an outward flange being formed at one end of the peripheral wall. The peripheral wall is fitted into a through hole formed in a ceiling facing, the ceiling facing having a lower surface against which the outward flange is pressed. In addition, support means is combined with the body so that the body can be installed and supported in the through hole in the ceiling facing by the support means. The internal hole is closed by the lid.

It is preferable that the peripheral wall is cylindrical, the internal hole being circular to have a diameter of 80 to 300 mm.

It is also preferable that the internal hole has the diameter of 125 to 200 mm.

In addition, it is preferable that the lid is made of the same material as the ceiling facing. It is also preferable that the lid includes a periphery covered by an external frame, the lid and the external frame being fitted into and supported in the internal hole.

It is preferable that the through hole is formed in the ceiling facing by cutting out the ceiling facing with a cutter, the lid being formed of the cut out ceiling facing.

Furthermore, it is preferable that the support means comprises a plurality of claws which are combined with the peripheral wall, the ceiling facing having an upper surface against which the claws are pressed. In this case, the body can be installed, supported and fixed by the claws and the outward flange.

In a preferred embodiment, a plurality of positions are predetermined along a wiring path when distributing an electric wire in a ceiling space formed above the ceiling facing. The body is installed in the through hole in the ceiling facing at each of the positions so that an operator can reach his hand into the ceiling space through the internal hole to distribute the electric wire in the ceiling space. The internal hole is then closed by the lid.

In other embodiment, the decorative frame is combined with a mounting frame which has a length corresponding to a distance between a ceiling surface and the ceiling facing between which the ceiling space is formed. The mounting frame extends vertically and includes upper and lower ends, the lower end being fixed to the peripheral wall. A fire sensor or gas leakage detector is mounted on the upper end of the mounting frame to be disposed near or brought into contact with the ceiling surface and opposed to the internal hole.

It is preferable that the mounting frame includes a plurality of legs which are spaced from each other about the internal hole in the decorative frame and fixed at lower ends to the peripheral wall of the decorative frame. It is also preferable that the mounting frame further includes a connecting portion by which the legs are connected at upper ends with each other, the fire sensor or gas leakage detector being mounted on the connecting portion.

In addition, it is preferable that the connecting portion extends parallel to the ceiling surface.

In other embodiment, a wiring fitting, monitoring camera, fire sensor, certain detector or alarm is fixed to the lid of the decorative frame, an electric wire being directed from the ceiling space to be connected to the wiring fitting, monitoring camera, fire sensor, certain detector or alarm.

### Brief description of the drawings

Fig. 1 is an exploded perspective view illustrating a preferred embodiment of the invention.
Fig. 2 is a sectional view of the decorative frame of Fig. 1.
Fig. 3 is a sectional view of other position.
Fig. 4 is a sectional view of the claws of Fig. 1.
Fig. 5 is an explanatory view illustrating how to distribute an electric wire by utilizing the decorative frame of Fig. 1.
Fig. 6 is an explanatory view illustrating the next step of Fig. 5.
Fig. 7 is an explanatory view illustrating other embodiment.

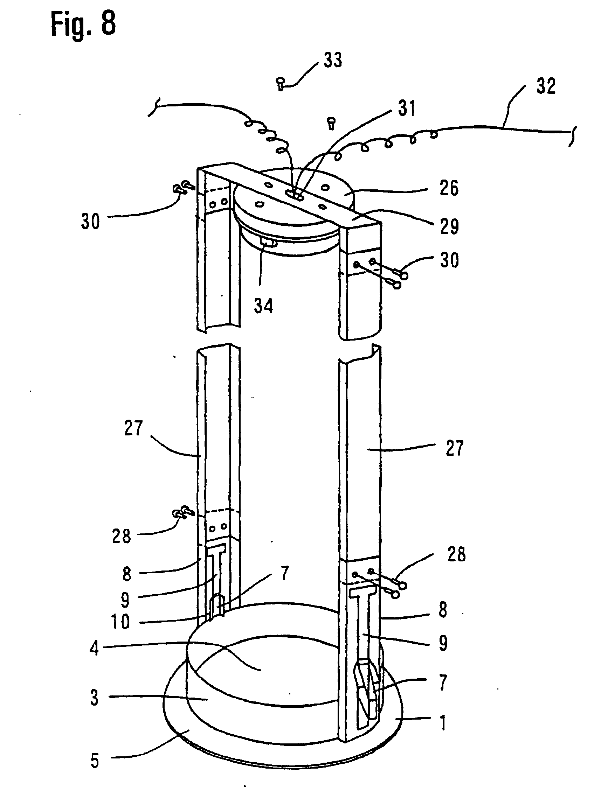

Fig. 8 is a perspective view of the mounting frame of Fig. 7.
Fig. 9 is an explanatory view illustrating other embodiment.
Fig. 10 is an explanatory view illustrating other embodiment.
Fig. 11 is a sectional view of the decorative frame of Fig. 10.
Fig. 12 is a bottom view of the decorative frame of Fig. 11.
Fig. 13 is a sectional view of other embodiment.
Fig. 14 is a sectional view of other embodiment.
Fig. 15 is an explanatory view of wiring paths in a ceiling space.
Fig. 16 is an explanatory view of other embodiment.
Fig. 17 is a perspective view of other embodiment.
Fig. 18 is a sectional view of the decorative frame of Fig. 17.

### The best mode to carry out the invention

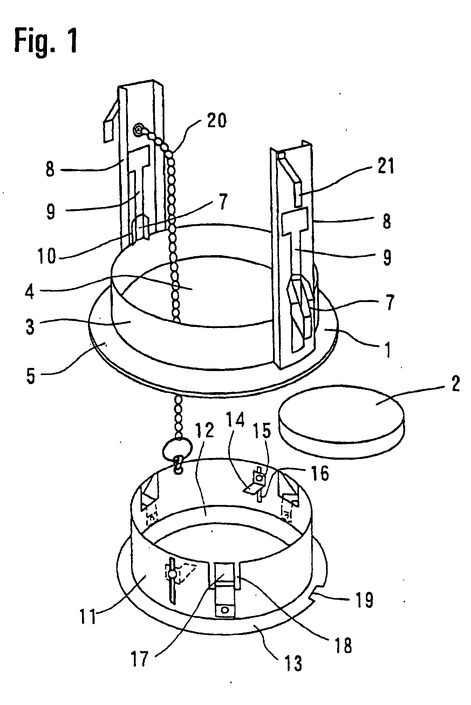

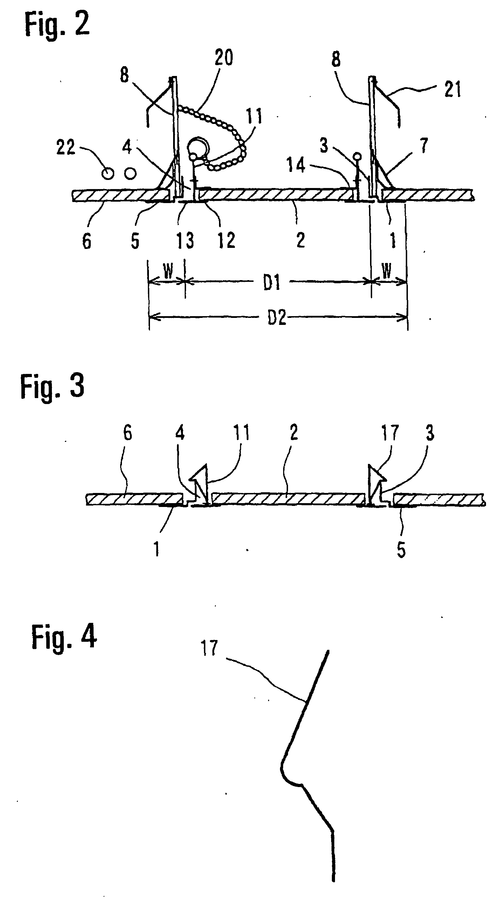

Referring now to the drawings, Fig. 1 illustrates a decorative frame according to the invention. The decorative frame comprises a body 1 and a lid 2, the body 1 including a cylindrical wall 3. An internal hole 4 is defined by and within the peripheral wall 3, an outward flange 5 being formed at one end of the peripheral wall 3. The peripheral wall 3 is fitted into a through hole formed in a ceiling facing 6, as shown in Fig. 2. The through hole is circular to have a diameter slightly larger than the peripheral wall 3 so that the peripheral wall 3 can be fitted into the through hole. The outward flange 5 is then pressed against the under surface of the ceiling facing 6.

It is preferable that the internal hole 4 is circular to have a diameter D1 of 80 to 300 mm. It is optimum that the internal hole 4 has the diameter D1 of 125 to 200 mm. The outward flange 5 extends radially of the peripheral wall 3 and have a width W of 15 to 20 x 2 mm. The body 1 therefore has an outer diameter D2 depending on the diameter D1 of internal hole 4 and the width W of outward flange 5. The body 1 has the outer diameter D2 of 110 to 340 mm when the internal hole 4 has the diameter D1 of 80 to 300 mm. The body 1 has the outer diameter D2 of 155 to 240 mm when the internal hole 4 has the diameter D1 of 125 to 200 mm.

In addition, support means is combined with the body 1 so that the body 1 can be installed and supported in the through hole in the ceiling facing 6 by the support means. The support means comprises a plurality of claws 7 which are combined with the peripheral wall 3 to be pressed against the upper surface of the ceiling facing 6. Accordingly, the body 1 can be installed, supported and fixed by the claws 7 and the outward flange 5. In the embodiment, a pair of claws 7 are combined with a pair of holders 8 fixed to the outer surface of the peripheral wall 3 at positions which are symmetrical diametrically of the peripheral wall 3. Each of the holders 8 comprises a channel member including a slot 9 in which the claw 7 is received. The claw 7 comprises a leaf spring including tongues 10, which is generally utilized. In operation, the tongues 10 are nipped between the fingers of operator so that the claw 7 can be flattened to be inserted into the slot 9 in the holder 8. The claw 7 is then moved downwardly along the slot 9 to be pressed against the upper surface of the ceiling facing 6. The tongues 10 are released from the fingers when the claw 7 is pressed against the upper surface of the ceiling facing 6 so that the claw 7 can be spread by resiliency and locked in the slot 9 at that position. It should therefore be noted that the claws 7 are pressed against the upper surface of the ceiling facing 6 to cooperate with the outward flange 5 pressed against the under surface of the ceiling facing 6 so that the body 1 can be installed, supported and fixed by the claws 7 and the outward flange 5. The tongues 10 may be nipped again between the fingers so that the claw 7 can be flattened to be moved upwardly along the slot 9 and removed from the slot 9. The body 1, the claws 7 and the holders 8 are made of metal or synthetic resin.

As to the internal hole 4 in the body 1, the internal hole 4 is closed by the lid 2. On the other hand, the ceiling facing 6 is made of material such as a plaster board, plywood or the like. The lid 2 is made of the same material as the ceiling facing 6. In addition, the lid 2 is disc shaped and a type of fitting. The lid 2 includes a periphery which is covered by an external frame 11 so that the lid 2 can be supported by or fixed to the external frame 11, the lid 2 and the external frame 11 being fitted into and supported in the internal hole 4 in the body 1. In the embodiment, the external frame 11 includes inward and outward flanges 12 and 13 formed at one end thereof. The lid 2 is engaged with and supported by the internal flange 12. Furthermore, a plurality of metal pieces 14 are disposed along the inner surface of the external frame 11 to protrude inwardly thereof. The metal pieces 14 are fastened and fixed to the external frame 11 by screws 15 which pass through slots 16 formed in the external frame 11. The screws 15 are intended to be once loosened so that the metal pieces 14 can be pushed and moved downwardly along the slots 16 to be pressed against the lid 2. The metal pieces 14 are then fastened to the external frame 11 by the screws 15 so that the lid 2 can be fixed to the upward flange 12 by the metal pieces 14. The screws 15 and the metal pieces 14 may be removed for separation of lid 2 from the external frame 11.

The external frame 11 further includes a plurality of hooks 17 each of which comprises a leaf spring. The hooks 17 are disposed in position along the outer surface of the external frame 11 and bended radially of the external frame 11 to protrude outwardly, as shown in Fig. 3 and Fig. 4. The hooks 17 are fixed at lower ends to the outer surface of the external frame 11 and received at upper ends in notches 18 formed in the external frame 11. Accordingly, the hooks 17 are engaged with and pressed against the inner surface of the peripheral wall 3 to be deformed and contracted by resiliency, when the lid 2 and the external frame 11 are fitted into the internal hole 4 in the body 1, so that the hooks 17 can be received in the notches 18 in the external frame 11 and moved slidingly along the inner surface of the peripheral wall 3. The hooks 17 then go across the top edge of the peripheral wall 3 to be spread by resiliency and engaged with the top edge of the peripheral wall 3. The lid 2 and the external frame 11 are therefore supported by the hooks 17 so that the internal hole 4 can be closed by the lid 2. It should be understood that the lid 2 and the external frame 11 can then be pushed downwardly for removal by a tool which is pressed into a notch 19 formed in the outward flange 13, the internal hole 4 being thereby opened. The external frame 11 is also made of metal or synthetic resin.

The lid 2 is connected with the peripheral wall 3 by drop prevention means. The drop prevention means comprises a chain or string 20 by which the external frame 11 and the holder 8 are connected to each other. The lid 2 and the external frame 11 are therefore prevented from being dropped by the chain or string 20 when the lid 2 and the external frame 11 are detached from the internal hole 4 in the body 2. The peripheral wall 3 includes drop prevention means comprising metal pieces 21 each of which comprises a leaf spring. The metal piece 21 is fixed to the upper end of each of the holder 8 and bended outwardly and downwardly. The body 1 is therefore prevented from being dropped by the metal pieces 21 engaged with the upper surface of the ceiling facing 6.

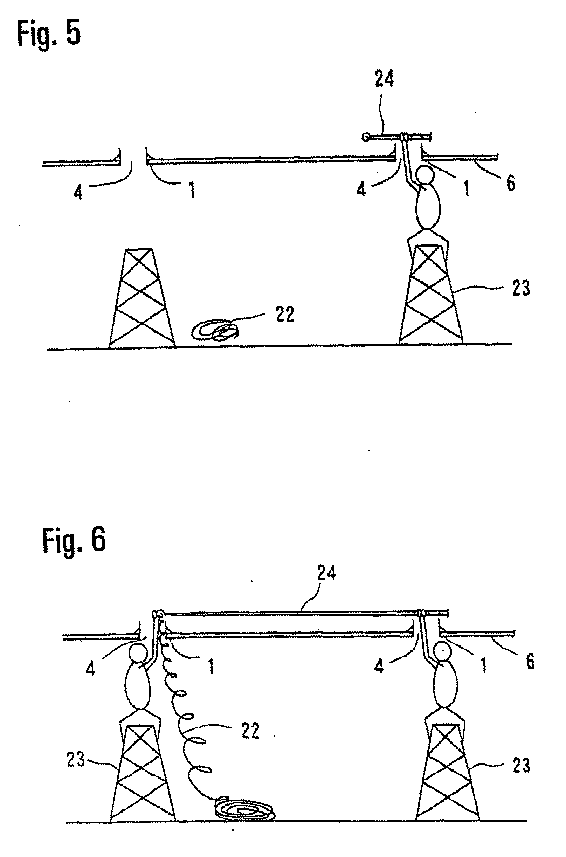

In the embodiment, a plurality of positions are predetermined along a wiring path when distributing an electric wire 22 in a ceiling space formed above the ceiling facing 6, as shown in Fig. 5. An operator goes up a stepladder 23 so that the through hole can be formed in the ceiling facing 6 by the operator, at each of the positions. The body 1 is then fitted into and installed in the through hole in the ceiling facing 6 by the operator on the stepladder 23, at each of the positions. The body 1 can be fitted and installed in such a way that the peripheral wall 3 is fitted into the through hole in the ceiling facing 6. The outward flange 5 is pressed against the under surface of the ceiling facing 6. The claws 7 are then inserted into the slots 9 in the holders 8 with the tongues 10 nipped between the fingers of operator, in the internal hole 4 in the body 1. The claws 7 are moved downwardly along the slots 9 to be pressed against the upper surface of the ceiling facing 6 so that the body 1 can be installed in the through hole in the ceiling facing 6.

In the next place, the operator reaches his hand into the ceiling space to put a cable catcher 24 into the ceiling space through the internal hole 4 in the body 1, at the first position. The operator handles the cable catcher 24 in the internal hole 4 in the body 1 to expand the cable catcher 24 toward a wire putting position, as shown in Fig. 6, at which other operator reaches his hand into the ceiling space to put the electric wire 22 into the ceiling space through the internal hole 4 in the body 1. The electric wire 22 can therefore be engaged with the cable catcher 24 at the wire putting position. The operator then handles the cable catcher 24 in the internal hole 4 in the body 1 to contract the cable catcher 24 at the first position so that the electric wire 22 can be drawn toward the first position by the cable catcher 24. The operator may take action at the wire putting position to throw and stretch the electric wire 22 toward the first position so that the electric wire 22 can be drawn by hand of the operator at the first position without utilizing the cable catcher 24. The operator then handles the cable catcher 24 in the internal hole 4 in the body 1 at the next position to expand the cable catcher 24 toward the first position so that the electric wire 22 can be drawn toward the next position by the cable catcher 24. The operator may take action at the first position to throw and stretch the electric wire 22 toward the next position so that the electric wire 22 can be drawn by hand of the operator at the next position.

The work is made at each of the positions again and again to distribute the electric wire 22 in the ceiling space. The lid 2 and the external frame 11 are then fitted into the internal hole 4 in the body 1 by the operator on the stepladder 23 at each of the positions so that the internal hole 4 can be closed by the lid 2. As to the lid 2, it is preferable that the through hole is formed in the ceiling facing 6 by cutting out the ceiling facing 6 with a cutter, the lid 2 being formed of the cut out ceiling facing 6. The lid 2 is then fitted into the external frame 11 and fixed by the metal pieces 14.

Accordingly, the decorative frame is useful to distribute the electric wire 22 in the ceiling space without causing an operator to enter the ceiling space and go ahead in the ceiling space. It simplifies the work, taking less time and labour, and resulting in short term of process and low cost of process. The operator has not to be bothered with equipments such as air conditioning ducts, exhaust ducts and water tubes which are disposed in the ceiling space since he does not need to enter the ceiling space and go ahead in the ceiling space. The equipments can not be damaged by a collision of operator with the equipments. What is called the ceiling space is a space formed above the ceiling facing 6 and defined between a ceiling surface and the ceiling facing 6, as described previously. The ceiling facing 6 is fixed to a framework of double ceiling. The frame work is composed of longitudinal and cross bars. The framework or ceiling facing 6 can not be damaged or broken by the weight of operator since the operator does not need to enter the ceiling space and go ahead in the ceiling space. The framework and ceiling facing 6 can not be dropped. The operator can also not be dropped.

In addition, the lid 2 is made of the same material as the ceiling facing 6 so that the ceiling facing 6 can be kept in appearance to hardly feel it strange, after the internal hole 4 is closed by the lid 2. The ceiling facing 6 comprises a plaster board, plywood or the like to be relatively fragile. However, the ceiling facing 6 is protected from being damaged by the peripheral wall 3 of the body 1 when the operator reaches his hand into the ceiling space to put the cable catcher 24 or electric wire 22 into the ceiling space through the internal holes 4 in the body 1 to distribute the electric wire 22 in the ceiling space. Notwithstanding the same material as the ceiling facing 6 to be relatively fragile, the lid 2 is also protected from being damaged by the external frame 11.

The lid 2 and the external frame 11 are supported by the hooks 17 not to be detached from the internal hole 4 in the body 1. Even if detached, the lid 2 and the external frame 11 can be prevented from being dropped by the chain or string 20 in safety. The body 1 is installed and supported by the claws 7 and the outward flange 5 not to detached from the through hole in the ceiling facing 6. Even if detached, the metal pieces 21 are engaged with the upper surface of the ceiling facing 6 so that the body 1 can be prevented from being dropped by the metal pieces 21 in safety.

As to the internal hole 4 in the body 1, it is significant that the internal hole 4 has the diameter D1 of 80 to 300 mm, as described previously. The body 1 is useless if the internal hole 4 has the diameter D1 less than 80 mm by reason that the operator can not put his hand into the internal hole 4. Conversely, the body 1 is unsuitable to be fitted into and installed in the through hole in the ceiling facing 6 if the internal hole 4 has the the the diameter D1 more than 300 mm to enlarge the outer diameter D2 of the body 1. Firstly, the decorative frames have so large sizes to spoil the harmony of the ceiling facing 6. In addition, the decorative frames are unacceptable in view of the design of ceiling facing 6 by reason that the bodies 1 have too large outer diameter D2 to be fitted into through holes formed in the ceiling facing 6 between the equipments such as lighting fittings, air conditioning apparatus, heat exchanger and sprinkler which are installed in position on the ceiling facing 6. The internal hole 4 is therefore essential to have the diameter D1 of 80 to 300 mm. These values are critical. The internal hole 4 is optimum to have the diameter D1 of 125 to 200 mm. The operator can put his hand into the internal hole 4 without difficulty if the internal hole 4 has the diameter D1 of 125 to 200 mm. Such the decorative frames can not spoil the harmony of the ceiling facing 6. It is also believed that the body 1 can be fitted into through hole formed in the ceiling facing 6 at each of the positions predetermined along a wiring path even if the equipments are installed in position on the ceiling facing 6.

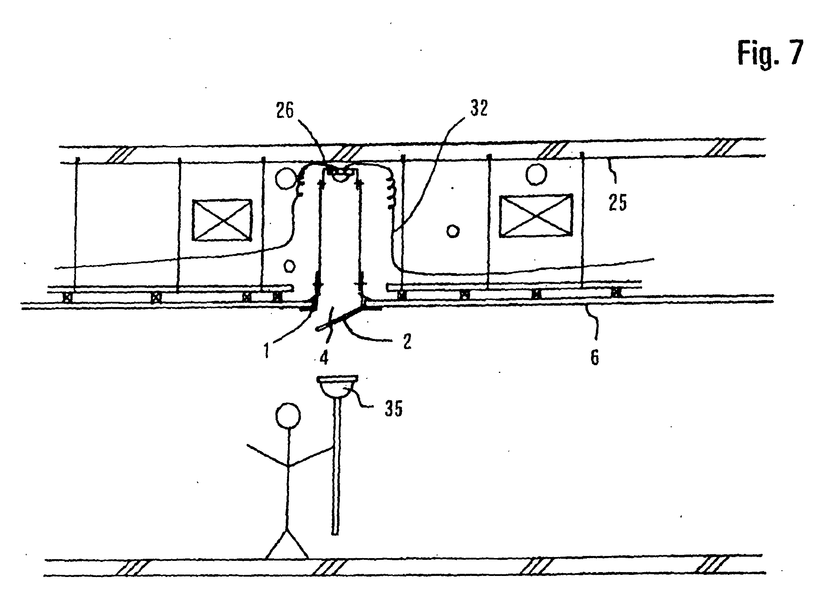

In other embodiment shown in Fig. 7, a decorative frame is combined with a mounting frame. The decorative frame has the same structure as that of Fig. 1 including the body 1 and the lid 2 and installed and supported in a through hole formed in the ceiling facing 6. The mounting frame has a length corresponding to a distance between a ceiling surface 25 and the ceiling facing 6 between which a ceiling space is formed. The mounting frame extends vertically and includes upper and lower ends, the lower end being fixed to the peripheral wall 3 of the body 1. In addition, a fire sensor 26 is mounted on the upper end of the mounting frame for installation in the ceiling space, to be disposed near or brought into contact with the ceiling surface 25 and opposed to the internal hole 4 in the body 1.

As to the fire sensor 26 in the ceiling space, the fire sensor 26 is prescribed in the fire law in Japan to be brought into contact with the the ceiling surface 25, or to be disposed within a distance of 25 to 30 cm of the ceiling surface 25. It is therefore preferable that the mounting frame has a length which is predetermined to make fire sensor 26 disposed within the distance of 25 to 30 cm of the ceiling surface 25. The mounting frame may have a length which is predetermined to make the fire sensor 26 brought into contact with the ceiling surface 25.

The mounting frame includes a plurality of legs 27 extending vertically. The legs 27 are spaced from each other about the internal hole 4 and fixed at lower ends to the peripheral wall 3 of the body 1. In the embodiment, a pair of legs 27 are disposed at positions which are symmetrical diametrically of the peripheral wall 3. The legs 27 comprise channel members including lower ends which are fitted with the holders 8 to be fixed to the holders 8 by screws 28 so that the legs 27 can be connected and fixed to the peripheral wall 3 by the holders 8.

The mounting frame further includes a connecting portion 29 by which the legs 27 are connected at upper ends with each other, the fire sensor 26 being mounted on the connecting portion 29. In the embodiment, the connecting portion 29 comprises a plate including opposite ends which are channel-shaped and fitted with the upper ends of the legs 27 to be fixed to the upper ends of the legs 27 by screws 30, the connecting portion 29 extending perpendicularly to the legs 27. The connecting portion 29 includes a through hole 31 and screw holes formed therein so that the fire sensor 26 can be connected to the electric wire 32 which passes through the through hole 31 in the connecting portion 29. The fire sensor 26 is then pressed against the under surface of the connecting portion 29. Screws 33 are threadedly engaged with the base of the fire sensor 26 through the screw holes in the connecting portion 29 so that the fire sensor 26 can be mounted on the connecting portion.

The fire sensor 26 includes a confirmatory lamp 34 for confirmation of actuating. In addition, the fire sensor 26 is arranged to be tested by a fire tester 35.

Accordingly, in the embodiment, the decorative frame and the mounting frame can be transported to the working spot with the holders 8, the legs 27 and the connecting portion 29 separated from each other. Each of the legs 27 is then cut on a floor into a length corresponding to a distance which is previously measured or calculated between the ceiling surface 25 and the ceiling facing 6 before execution of framework of double ceiling. In addition, the connecting portion 29 is connected and fixed to the legs 27 by the screws 30. The legs 27 are then connected to the holders 8 by the screws 28.

Furthermore, a through hole is formed in the ceiling facing 6 by an operator on a stepladder after the ceiling facing 6 is fixed to the framework. The electric wire 32 is drawn from the ceiling space through the through hole by the operator on the stepladder. The fire sensor 26 is then connected to the electric wire 32 and mounted on the connecting portion 29 of the mounting frame by the operator on the floor. The operator goes up the stepladder again to lift the decorative frame and the mounting frame. The operator puts the legs 27 and the connecting portion 29 into the ceiling space through the through hole in the ceiling facing 6. The body 1 is then fitted into and installed in the through hole in the ceiling facing 6 so that the fire sensor 26 can be disposed near or brought into contact with the ceiling surface 25 for installation in the ceiling space.

The body 1 can be fitted into and installed in such the way that the peripheral wall 3 is fitted into the through hole in the ceiling facing 6, as in the case of the embodiment of Fig. 1. The outward flange 5 is pressed against the under surface of the ceiling facing 6. The claws 7 are then inserted into the slots 9 in the holders 8 with the tongues 10 nipped between the fingers of operator, in the internal hole 4 in the body 1. The body 1 can therefore be installed by the claws 7 which are moved downwardly along the slots 9 to be pressed against the upper surface of the ceiling facing 6. The lid 2 and the external frame 11 are then fitted into the internal hole 4 in the body 1 so that the internal hole 4 can be closed by the lid 2.

Accordingly, unlike the prior art, fire sensors are not required to be fixed to the ceiling surface 25 before execution of framework. The fire sensor 26 can be disposed near or brought into contact with the ceiling surface 25 for installation in the ceiling space by the body 1 fitted into and installed in the through hole in the ceiling facing 6 after execution of framework and without difficulty. In addition, it is advantageous in view of the working steps to make the electric wire 32 drawn from the ceiling space so that the fire sensor 26 can be connected to the electric wire 32 after execution of framework.

Furthermore, the fire sensor 26 is opposed to the internal hole 4 after installation of fire sensor 26. An inspection hole is therefore constituted by the internal hole 4 in the body 1 when the internal hole is opened by the lid 2 removed so that the fire sensor 26 can be inspected from the floor through the inspection hole 4. The confirmatory lamp 34 can be seen from the floor through the inspection hole 4 for confirmation of actuating. The fire tester 35 can also be manipulated on the floor to stretch toward and approach the fire sensor 26 through the inspection hole 4, so as to fire test the fire sensor 26. Unlike the prior art, the operator needs not to enter the ceiling space and go ahead in the ceiling space to approach the fire sensor whenever inspecting and fire testing. It simplifies the work. The operator has not to be bothered with equipments since he does not need to enter the ceiling space and go ahead in the ceiling space. The equipments can not be damaged by the collision of operator with the equipments. The framework or ceiling facing 6 can not be damaged or broken by the weight of operator. The framework and ceiling facing 6 can not be dropped. The operator can also not be dropped.

A confirmatory lamp may be mounted on the outward flange 5 of the body 1 and connected to the fire sensor 26 to be seen from the floor for confirmation without making the lid 2 removed and the internal hole 4 opened.

In addition, the body 1 can be removed and lowered from the through hole in the ceiling facing 6 to put the the legs 27 and the connecting portion 29 out of the ceiling space through the through hole in the ceiling facing 6 when the fire sensor 26 is required to be exchanged for new one because of failure. The electric wire 32 is also drawn from the ceiling space along with the fire sensor 26 and the connecting portion 29. The body 1 can be removed without problem in such a way that the claws 7 are moved upwardly along the slots 9 and removed from the slots 9 with the tongues 10 nipped between the fingers of operator in the internal hole 4 in the body 1. The fire sensor 26 can therefore removed and exchanged by the operator on the floor. The operator can then put the legs 27 and the connecting portion 29 into the ceiling space through the through hole in the ceiling facing 6. The body 1 is fitted into and installed in the through hole in the ceiling facing 6 again. This simplifies the work. Unlike the prior art, the fire sensor is not required to be removed and exchanged in the ceiling space in which the equipments are disposed.

The decorative frame is also capable of addition of fire sensor. It is merely required that a through hole is newly formed in the ceiling facing 6 so that the electric wire 32 can be drawn from the ceiling space. A fire sensor 26 is connected to the electric wire 32. The body 1 is then fitted into and installed in the through hole in the ceiling facing 6 for addition of fire sensor and without difficulty.

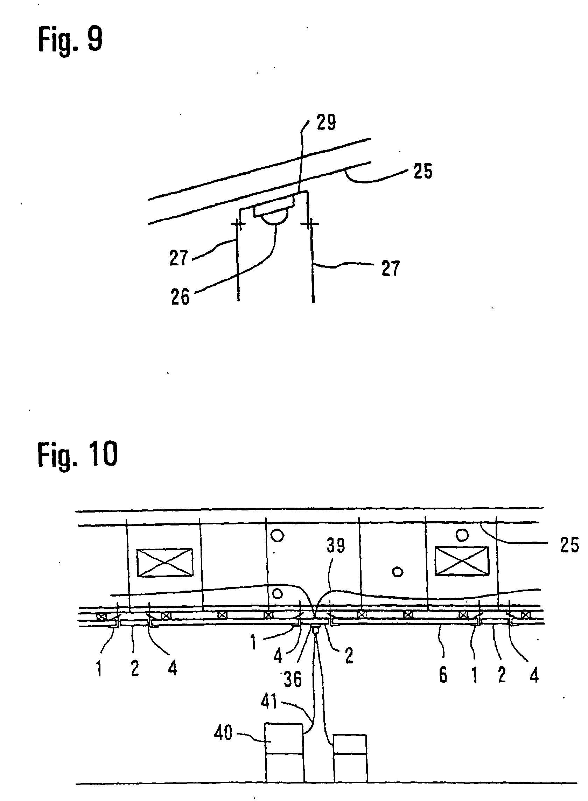

The connecting portion 29 extends perpendicularly to the legs 27, as described previously. In this case, the connecting portion 29 is disposed parallel to the ceiling surface 25 when the ceiling surface 25 extends parallel to the ceiling facing 6. The fire sensor 26 can therefore be disposed parallel to the ceiling surface 25. The connecting portion 29 may be inclined with respect to the legs 27 so that the connecting portion 29 and the fire sensor 26 can be disposed parallel to the ceiling surface 25 when the ceiling surface 25 is inclined with respect to the ceiling facing 6, as shown in Fig. 9.

A gas leakage detector may be substituted for the fire sensor 26 and mounted on the connecting portion 29 of the mounting frame. The gas leakage detector can therefore be installed in the ceiling space without difficulty. The gas leakage detector can also be inspected and exchanged without difficulty.

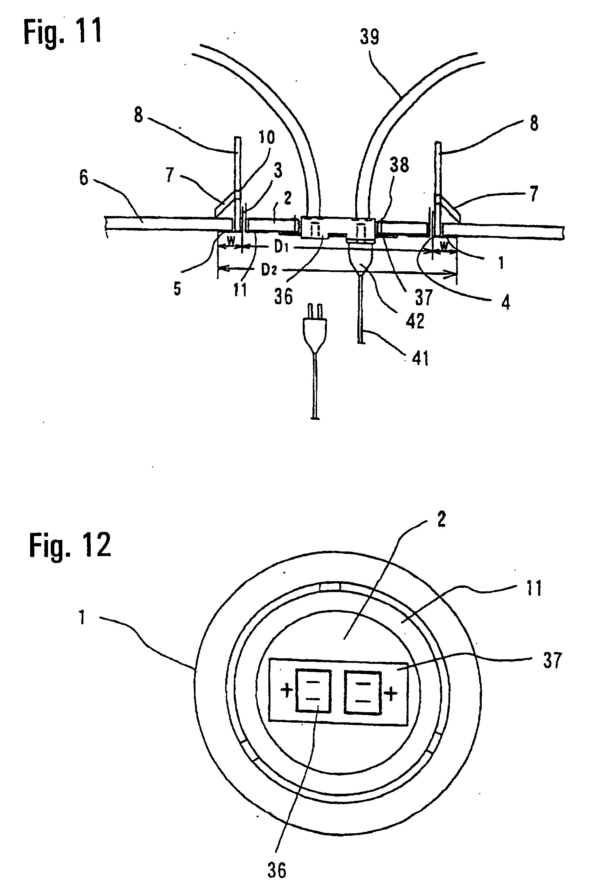

In other embodiment of Fig. 10, a wiring fitting is fixed to the lid 2 of the decorative frame of Fig. 1. The wiring fitting comprises a flush or embedded plug receptacle 36 which is inserted into and embedded in a through hole formed in the lid 2, as shown in Fig. 11 and Fig. 12. The receptacle 36 is fixed to the lid 2 by metal pieces 37 and screws 38 and exposed upwardly and downwardly of the lid 2. In addition, electric wires 39 are directed to the receptacle 36 from the ceiling space to be connected to the receptacle 36. Electric apparatus 40 include electric wires 41 having plugs 42 which are inserted into the receptacle 36 of the lid 2 so that the electric wires 41 can be connected to the receptacle 36 of the lid 2.

In the embodiment, a through hole is formed in the ceiling facing 6 by an operator on a stepladder, as in the case in the embodiment of Fig. 1, for installation of receptacle 36 on the ceiling facing 6. The body 1 is then fitted into and installed in the through hole in the ceiling facing 6 by the operator. In addition, the electric wires 39 are drawn from the ceiling space through the internal hole 4 in the body 1 by the operator. The electric wires 39 are then directed to the lid 2 and connected to the receptacles 36 by the operator on the stepladder or on the floor. Furthermore, the lid 2 and the external frame 11 are fitted into the internal hole 4 in the body 1 by the operator on the stepladder so that the internal hole 4 can be closed by the lid 2 to thereby install the receptacle 36 in position on the ceiling facing 6. Accordingly, the electric wires 41 can then be directed from the electric apparatus 40 and connected to the receptacle 36 of the ceiling facing 6.

The electric wires 39 are not always necessary to be drawn from the ceiling space. New electric wires may be connected to the receptacle 36 before the internal hole 4 is closed by the lid 2. The operator may then put the electric wires into the ceiling space through the internal hole 4 in the body 1 to distribute the electric wires in the ceiling space. The internal hole 4 is then closed by the lid 2 to thereby install the receptacle 36 in position on the ceiling facing 6. The electric wires 41 can therefore be directed from the electric apparatus and connected to the receptacle 36.

Accordingly, unlike the prior art, open wires are not required to be laid along the under surface of the ceiling facing 6 and connected to a receptacle when installation of receptacle on the ceiling facing 6. The electric wires 39 can be directed from the ceiling space and connected to the receptacle 36. The receptacle 36 can then be installed by the lid 2 which is fitted into the internal hole 4 in the body 1 so that the internal hole 4 can be closed by the lid 2. This simplifies the work, taking less time and labour, and resulting in short term of process and low cost of process.

Furthermore, as to the electric wires 39 in the ceiling space, unlike the open wires, the electric wires are not required to be coated and protected by protective covers, resulting in low cost of material. In addition, the ceiling facing 6 is not lowered in appearance by the open wires. The lid 2 is made of the same material as the ceiling facing 6 so that the ceiling facing 6 can be kept in appearance to hardly feel it strange. The lid 2 can be removed from the internal hole 4 in the body 1 to confirm and inspect the connection of receptacle 36, when clarifying the cause of trouble. The receptacle 36 has therefore not to be once removed from the lid 2, simplifying the work.

It should be also noted that the ceiling facing 6 is protected from being damaged by the the body 1 when the electric wires 39 are drawn from the ceiling space through the internal hole 4 in the body 1. The ceiling facing 6 is protected from being damaged by the body 1 when putting new electric wires into the ceiling space. The lid 2 is also protected from being damaged by the external frame 11.

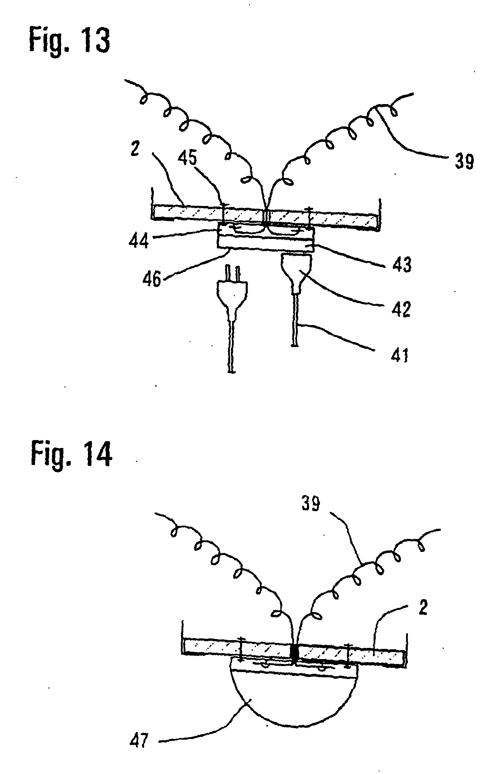

The wiring fitting may comprises a surface plug receptacle 43 installed on the lid 2, as shown in Fig. 13. In case of the surface plug receptacle 43, a through hole is formed in the lid 2 so that electric wires 39 can be directed to the base 44 of the receptacle 43 from the ceiling space through the through hole to be connected to terminals. The base 44 is then pressed against the under surface of the lid 2 and fixed to the lid 2 by screws 45. In addition, a protective cover 46 is fitted with the base 44. The plugs 42 can therefore be inserted into the receptacle 43 for connection of electric wires 41 of the electric apparatus 40 to the receptacle 43.

A communication jack or television series unit may be substituted for the receptacle 36 or 43 and installed on the lid 2, the electric wires 39 being directed from the ceiling space and connected to the communication jack or television series unit, so that the communication jack or television series unit can be installed in position on the ceiling facing 6. The electric wires can therefore be directed from the electric apparatus and connected to the communication jack or television series unit. Other wiring fitting may be installed on the lid 2, the electric wires 39 being directed from the ceiling space and connected to the wiring fitting.

A monitoring camera or fire sensor may be installed on the lid 2 for newly installation, the electric wires 39 being directed from the ceiling space and connected to the monitoring camera or fire sensor, so that the monitoring camera or fire sensor can be installed in position on the ceiling facing 6. An infrared or thermal crime preventing detector 47 may be installed on the lid for newly installation, the electric wires 39 may be directed from the ceiling space and connected to the infrared or thermal crime preventing detector 47, as shown in Fig. 14, so that the infrared or thermal crime preventing detector 47 can be installed in position on the ceiling facing 6. In addition to the infrared or thermal crime preventing detector 47, a certain detector such as a temperature detector, humidity detector or gas leakage detector may be installed on the lid 2 for newly installation, the electric wires 39 being connected to the certain detector, so that the certain detector can be installed in position on the ceiling facing 6. An alarm such as a buzzer may be installed on the lid for newly installation, the electric wires 39 being directed from the ceiling space and connected to the alarm, so that the alarm can be installed in position on the ceiling facing 6.

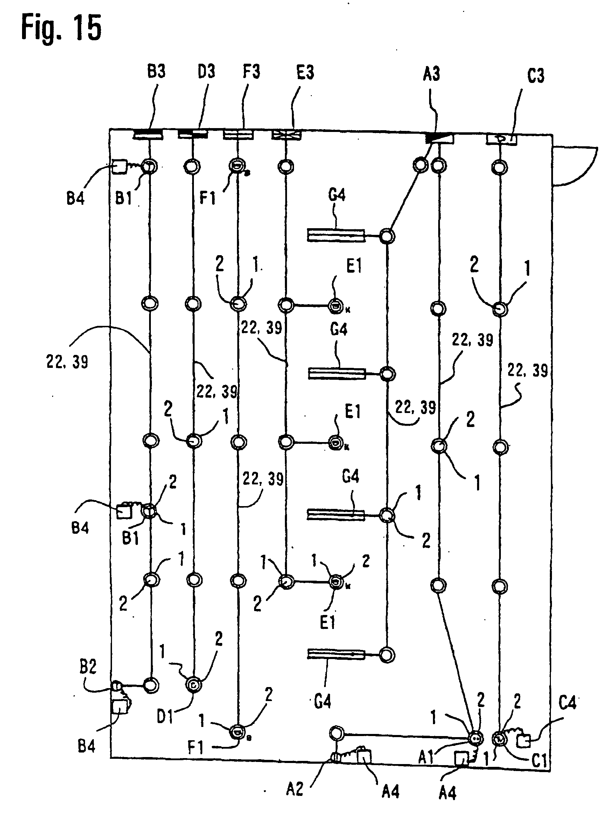

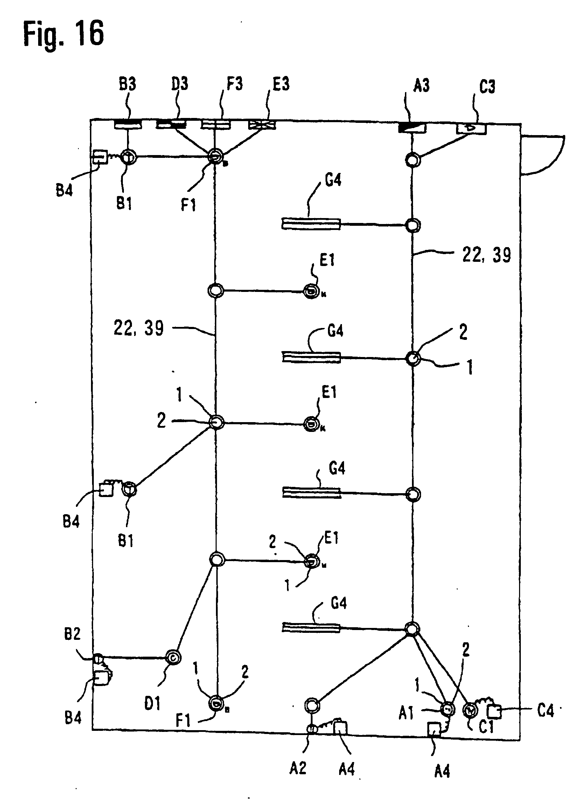

Fig. 15 and Fig. 16 illustrate wiring paths in the ceiling space of Fig. 10. In the embodiment, a plug receptacle A1 is installed on the lid 2 of a decorative frame which comprises a body 1 including an internal hole 4 closed by the lid 2. In addition, other plug receptacle A2 is fixed to the inner surface of wall. Furthermore, there are utilized other decorative frames including bodies 1 and lids 2 to distribute electric wires 22 and 39 in the ceiling space. The electric wires 22 and 39 are connected to the receptacles A1 and A2 and a distribution board A3. An electrical apparatus A4 includes electric wires connected to the receptacles A1 and A2. A communication jack B1 is installed on the lid 2 of other decorative frame which comprises a body 1 including an internal hole 4 closed by the lid 2. In addition, other communication jack B2 is fixed to the inner surface of wall. The electric wires 22 and 39 are connected to the communication jack B1 and B2 and a communication terminal board B3. A telephone B4 includes electric wires connected to the communication jack B1 and B2. A television series unit C1 is installed on the lid 2 of other decorative frame which comprises a body 1 including an internal hole closed by the lid 2. The electric wires 22 and 39 are connected to the television series unit C1 and a television distributor C3. A television C4 includes electric wires connected to the television series unit C1. A monitoring camera D1, a fire sensor E1 and an infrared or thermal crime preventing detector F1 are installed on the lids 2 of other decorative frames comprises bodies 1 including internal holes 4 closed by the lids 2. The electric wires 22 and 39 are connected to these elements and a monitoring panel D3, a fire receiver E3 and a prime preventing receiver F3. In addition, the electric wires 22 and 39 are connected to lighting fittings G4 and the distribution board A3.

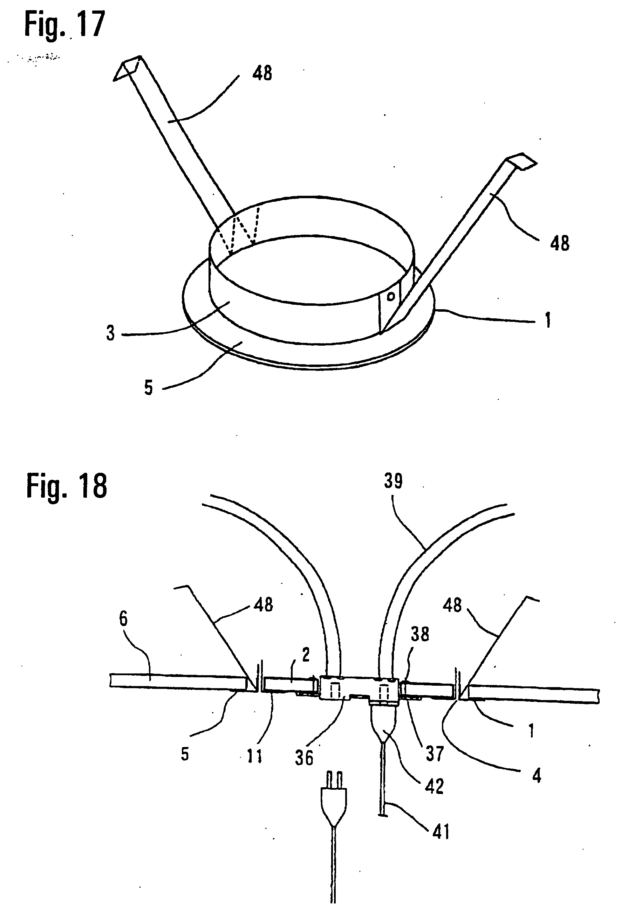

The body 1 may be supported in the through hole in the ceiling facing by support means other than the claws 7 of Fig. 1. For example, the support means may comprises a plurality of fingers 48, as shown in Fig. 17 and Fig. 18. In the embodiment, a pair of fingers 48 is fixed to the outer surface of the peripheral wall 3 at the positions which are symmetrical diametrically of the peripheral wall 3. Each of the fingers 48 comprises a leaf spring and extends upwardly from the peripheral wall 3 to be inclined outwardly. In operation, the fingers 48 are nipped between and contracted by the hands of operator so that the peripheral wall 3 can be fitted into the through hole in the ceiling facing 6. The fingers 48 are then spread by resiliency in the through hole and engaged with the top edge of the through hole so that the body 1 can be installed and supported in the through hole in the ceiling facing 6 by the fingers 48 and the outward flange 5.

The body 1 may include not the cylindrical peripheral wall 3 but a rectangular peripheral wall.

## Claims

1. A decorative frame comprising:
a body including a cylindrical or rectangular peripheral wall, an internal hole defined by and within said peripheral wall, and an outward flange formed at one end of said peripheral wall, said peripheral wall being fitted into a through hole formed in a ceiling facing, said ceiling facing having a lower surface against which said outward flange is pressed;
support means combined with said body, said body being installed and supported in said through hole in said ceiling facing by said support means; and
a lid by which said internal hole is closed.

2. The decorative frame as set forth in claim 1 wherein said peripheral wall is cylindrical, said internal hole being circular to have a diameter of 80 to 300 mm.

3. The decorative frame as set forth in claim 2 wherein said internal hole has the diameter of 125 to 200 mm.

4. The decorative frame as set forth in claim 2 wherein said lid is made of the same material as said ceiling facing, said lid including a periphery covered by an external frame, said lid and said external frame being fitted into and supported in said internal hole.

5. The decorative frame as set forth in claim 4 wherein said through hole is formed in said ceiling facing by cutting out said ceiling facing with a cutter, said lid being formed of the cut out ceiling facing.

6. The decorative frame as set forth in claim 5 wherein said support means comprises a plurality of claws which are combined with said peripheral wall, said ceiling facing having an upper surface against which said claws are pressed, said body being installed, supported and fixed by said claws and said outward flange.

7. The decorative frame as set forth in any one of claims 1 to 6 wherein a plurality of positions are predetermined along a wiring path when distributing an electric wire in a ceiling space formed above said ceiling facing, said body being installed in said through hole in said ceiling facing at each of said positions so that an operator can reach his hand into said ceiling space through said internal hole to distribute said electric wire in said ceiling space, said internal hole being then closed by said lid.

8. The decorative frame as set forth in any one of claims 1 to 6 wherein said decorative frame is combined with a mounting frame which has a length corresponding to a distance between a ceiling surface and said ceiling facing between which said ceiling space is formed, said mounting frame extending vertically and including upper and lower ends, said lower end being fixed to said peripheral wall, a fire sensor or gas leakage detector being mounted on said upper end to be brought into contact with or disposed near said ceiling surface and opposed to said internal hole.

9. The decorative frame as set forth in claim 8 wherein said mounting frame includes a plurality of legs which are spaced from each other about said internal hole and fixed at lower ends to said peripheral wall, said mounting frame further including a connecting portion by which said legs are connected at upper ends with each other, said fire sensor or gas leakage detector being mounted on said connecting portion.

10. The decorative frame as set forth in claim 9 wherein said connecting portion extends parallel to said ceiling surface.

11. The decorative frame as set forth in any one of claims 1 to 5 wherein a wiring fitting, monitoring camera, fire sensor, certain detector or alarm is fixed to said lid, an electric wire being directed from said ceiling space to be connected to said wiring fitting, monitoring camera, fire sensor, certain detector or alarm.
